# EUROPÄISCHE PATENTSCHRIFT

(11) **EP 1 522 004 B1**
(45) Veröffentlichungstag und Bekanntmachung des Hinweises auf die Patenterteilung: **01.02.2006**
(21) Anmeldenummer: 03775296.1
(22) Anmeldetag: 05.11.2003
(51) Int. Cl.: G05B 19/4067, G05B 19/18

(54) **WERKZEUGMASCHINE UND VERFAHREN ZUM BETREIBEN EINER SOLCHEN**
MACHINE TOOL AND METHOD FOR OPERATING A TOOL OF THIS TYPE
MACHINE-OUTIL ET SON MODE DE FONCTIONNEMENT

(30) Priorität: 19.11.2002 DE 10255033
(43) Veröffentlichungstag der Anmeldung: 13.04.2005
(73) Patentinhaber: STAMA MASCHINENFABRIK GMBH, D-73278 Schlierbach (DE)
(72) Erfinder: GRUND, Peter, 78647 Trossingen (DE); KUPPINGER, Rolf, 73278 Schlierbach (DE); FROMMER, Karl, 73278 Schlierbach (DE)
(74) Vertreter: Duhme, Torsten
(86) Internationale Anmeldenummer: PCT/EP2003/012321
(87) Internationale Veröffentlichungsnummer: WO 2004/046836

(56) Entgegenhaltungen:
- EP-A- 0 137 046
- EP-A- 0 373 222
- EP-A- 1 058 171
- WO-A-00/66320
- US-A- 4 714 999
- US-A- 5 060 544
- US-A- 5 414 633

## Beschreibung

Die vorliegende Erfindung betrifft ein Verfahren zum Betreiben einer Werkzeugmaschine, die einen relativ zu einem Werkstück beweglichen Werkzeugträger sowie eine erste Steuerung zum Steuern einer relativen Arbeitsbewegung des Werkzeugträgers bezogen auf das Werkstück aufweist, mit den Schritten:
- Steuern von ersten relativen Bewegungsbahnen des Werkzeugträgers mit Hilfe eines in die erste Steuerung geladenen ersten Steuerprogramms, das eine Reihe von aufeinanderfolgend vorgesehenen Bearbeitungsvorgängen definiert,
- Stillsetzen der relativen Arbeitsbewegungen des Werkzeugträgers bei Auftreten eines ungeplanten Ereignisses, und
- erneutes Starten von ersten relativen Arbeitsbewegungen des Werkzeugträgers von einer Ausgangsposition aus,
wobei der Werkzeugträger entlang von definierten zweiten relativen Bewegungsbahnen in die Ausgangsposition verfahren wird, und wobei die zweiten relativen Bewegungsbahnen in Abhängigkeit von dem Bearbeitungsvorgang, zu dem das ungeplante Ereignis auftrat, automatisch bestimmt werden.

Die Erfindung betrifft ferner eine Werkzeugmaschine, insbesondere zur spanabhebenden Bearbeitung von metallischen Werkstücken, mit einem relativ zu einem Werkstück beweglichen Werkzeugträger und mit einer ersten Steuerung, die mit Hilfe eines ersten, eine Reihe von aufeinanderfolgenden Bearbeitungsvorgängen definierenden Steuerprogramms erste relative Bewegungsbahnen des Werkzeugträgers steuert, ferner mit einer Logik, die so ausgebildet ist, dass der Werkzeugträger nach einer ungeplanten Unterbrechung der Bearbeitungsvorgänge entlang von definierten zweiten relativen Bewegungsbahnen in einer Ausgangsposition verfahrbar ist, wobei die zweiten relativen Bewegungsbahnen in Abhängigkeit von dem Bearbeitungsvorgang, zu dem die Unterbrechung auftrat, automatisch bestimmt werden.

Ein solches Verfahren und eine entsprechende Werkzeugmaschine sind beispielsweise aus DE 33 29 658 C2 bekannt.

Moderne Werkzeugmaschinen für die spanabhebende Bearbeitung von metallischen Werkstücken sind in der Lage, eine Vielzahl von komplexen Bearbeitungsvorgängen automatisiert auszuführen. Die Bearbeitungsvorgänge können bspw. Fräsen, Drehen, Bohren, Schleifen und anderes beinhalten, wobei eine Vielzahl von Werkzeugen und Werkzeugtypen in den Werkzeugträger eingespannt werden. Der Werkzeugträger beinhaltet häufig eine Arbeitsspindel, die das eingespannte Werkzeug in eine Drehbewegung versetzt (u.a. beim Bohren und Fräsen). In vielen Fällen ist die Arbeitsspindel zudem in mehreren Raumrichtungen verfahrbar, so dass sie an verschiedenen Raumpunkten an dem zu bearbeitenden Werkstück angreifen kann. Der Werkzeugträger kann jedoch auch starr sein und mit einem entsprechend bewegten Werkstückhalter zusammenwirken, was insbesondere beim Drehen der Fall ist. Darüber hinaus kann auch das Werkstück beweglich gehalten sein. Letztlich kommt es nur auf die relative Bewegung zwischen Werkzeug und zu bearbeitendem Werkstück an, die entlang der sogenannten NC-Achsen erfolgt.

Die Bearbeitung des Werkstücks wird in aller Regel mit einer sogenannten NC-Steuerung (Numerical Control) gesteuert. In die NC-Steuerung wird vom Bediener der Werkzeugmaschine ein (erstes) Steuerprogramm, das sogenannte NC-Programm, geladen. Das NC-Programm beinhaltet eine Vielzahl von aufeinanderfolgend auszuführenden Steuersätzen, mit denen die relativen Bewegungen zwischen Werkzeug und Werkstück für jeden Bearbeitungsschritt gesteuert werden.

Die Funktionalität der NC-Steuerung im klassischen Sinne beschränkt sich auf die Bewegungen der NC-Achsen. Darüber hinaus werden diverse Hilfsaggregate der Werkzeugmaschine mit einer zweiten Steuerung, üblicherweise einer sogenannten SPS (Speicher programmierbare Steuerung) gesteuert. Zu den Hilfsaggregaten gehören insbesondere ein Werkzeugmagazin, in dem die benötigten Werkzeuge (Fräser, Bohrer, Drehmeißel etc.) bevorratet sind, ein Werkzeugwechsler zum Einsetzen und Entnehmen von Werkzeugen aus dem Magazin und dem Werkzeughalter, ein verschwenkbarer Arbeitstisch, auf dem die Werkstücke aufgespannt werden, sowie Aggregate für Kühlmittelzufuhr, Druckluftzufuhr und anderes. Es versteht sich, dass die Steuerprozesse der NC-Steuerung und der SPS gut aufeinander abgestimmt sein müssen, was in der Regel durch einen Datenaustausch über geeignete Schnittstellen erfolgt. Häufig sind die NC-Steuerung und die SPS bei heutigen Maschinen auch in einer Baueinheit zusammengefasst, so dass körperlich nur eine Steuereinheit vorliegt, die jedoch beide Funktionalitäten in sich vereint.

Die modernen Werkzeugmaschinen der vorstehend beschriebenen Art sind in der Lage, Werkstücke mit hohen Bearbeitungsgeschwindigkeiten und gleichbleibender Qualität herzustellen. Je schneller die Werkzeugmaschine arbeitet, desto höhere Stückzahlen lassen sich produzieren. Der heute bereits sehr effizient gestaltete Produktionsablauf wird jedoch empfindlich gestört, wenn es im Betrieb der Werkzeugmaschine zu unerwarteten/ungeplanten Unterbrechungen kommt, wie bspw. ein Energieausfall, ein automatisch oder von Hand ausgelöster Not-Stop, eine Fehlbedienung in Form eines unbeabsichtigten manuellen Eingriffs oder eine Überlastsituation, die zum Beispiel durch einen Werkzeugbruch verursacht wird. Bei derartigen Ereignissen wird der programmierte Bewegungsablauf mehr oder weniger abrupt unterbrochen. Zur Wiederaufnahme des Produktionsablaufs muss die Werkzeugmaschine als erstes von Hand wieder in einen Ausgangszustand gebracht werden, von dem aus ein Neustart und insbesondere ein Wiedereinstieg in das NC-Programm erfolgen kann. Je nach Ursache des ungeplanten Stops und abhängig von der aktuellen Betriebssituation, zu der die Unterbrechung auftrat, ist es jedoch heute schwierig, die Werkzeugmaschine in den geeigneten Ausgangszustand zu versetzen. Die damit verbundenen Stillstandszeiten sind für den Produktionsablauf nachteilig. Zudem besteht die Gefahr eines "Crashs" infolge einer Fehlbedienung in dieser Situation.

Aus der WO 00/66320 ist es bekannt, die Stromversorgung der Werkzeugmaschine zu überwachen, um bei einem erkannten Stromausfall einen mechanischen Energiespeicher zu aktivieren, der für eine gewisse Zeitspanne die Energieversorgung aufrecht erhält. Die Arbeitsspindel wird mit der mechanisch erzeugten "Restenergie" in eine Parkposition gefahren. Der erneute Start der Werkzeugmaschine nach einem Stromausfall wird hierdurch schon wesentlich erleichtert.

Dieser Ansatz ist jedoch auf Situationen beschränkt, in denen die elektrische Energiezufuhr unerwartet ausfällt. Es gibt darüber hinaus vergleichbare Ansätze, wonach bspw. bei einem Not-Aus noch ein gesteuertes Stillsetzen innerhalb der ersten Sekunden oder Sekundenbruchteile nach Auslösen des Not-Aus-Befehls erfolgt. Es verbleiben jedoch trotz derartiger isolierter Maßnahmen eine ganze Reihe von Szenarien, bei denen der erneute Start der Werkzeugmaschine aufwendig und langwierig ist, was zu langen Stillstandszeiten der Maschine führen kann.

Aus der eingangs genannten DE 33 29 658 C2 ist es bekannt, den Meißel einer numerisch gesteuerten Drehbank entlang von einer automatisch bestimmten Bewegungsbahn aus dem Eingriff am Werkstück in eine vom Werkstück entfernte Rückzugsposition zu verfahren. Anschließend kann das Werkstück von der Rückzugsposition aus erneut angefahren werden. Gründe für das Aufrufen des Rückzugsprogramms können eine Beschädigung des Werkstücks, eine von der Steuerung festgestellte Abweichung oder eine vom Benutzer der Drehbank gewünschte Unterbrechung sein. Charakteristisch an dem bekannten Verfahren ist jedoch, dass das Anfahren der Rückzugsposition aus der aktuellen Arbeitsbewegung heraus erfolgt, was bedeutet, dass die Drehbank zu diesem Zeitpunkt noch in der Lage sein muss, die Rückzugsbewegung auszuführen. Genau dies ist bei vollkommen ungeplanten Unterbrechungen des Bearbeitungsvorgangs häufig nicht der Fall.

Ähnliche Verfahren, wie in DE 33 29 658 C2 beschrieben, sind auch aus DE 31 26 276 C2, DE 16 02 867 A1, EP 0 137 046 A, US 5,414,633 oder US 5,060,544 bekannt. Auch diesen bekannten Verfahren liegt jedoch vor allem der Aspekt zugrunde, bei einer Unterbrechung des Bearbeitungsablaufs eine definierte Park- oder Ausgangsposition anzufahren. Wie mit einer Situation umzugehen ist, in der das Anfahren der Ausgangs- oder Parkposition auf Grund der Art der Unterbrechung nicht möglich ist, offenbaren diese Druckschriften nicht.

Vor diesem Hintergrund ist es eine Aufgabe der vorliegenden Erfindung, ein Verfahren und eine Werkzeugmaschine der eingangs genannten Art anzugeben, mit denen sich Stillstandszeiten infolge von ungeplanten Unterbrechungen im Produktionsablauf spürbar reduzieren lassen.

Diese Aufgabe wird gemäß einem Aspekt der Erfindung durch ein Verfahren der eingangs genannten Art gelöst, bei dem der Werkzeugträger zu Beginn des Neustarts zunächst einmal von seiner aktuellen Position nach dem Stillsetzen entlang der zweiten Bewegungsbahnen in die Ausgangsposition verfahren wird.

Gemäß einem weiteren Aspekt der Erfindung wird diese Aufgabe durch eine Werkzeugmaschine der eingangs genannten Art gelöst, bei der die Logik eine Startlogik ist, die den Werkzeugträger beim erneuten Starten der Werkzeugmaschine zunächst von seiner aktuellen Position nach der ungeplanten Unterbrechung entlang der zweiten Bewegungsbahnen in die Ausgangsposition verfährt.

Bei dem neuen Verfahren und der neuen Werkzeugmaschine wird der Werkzeugträger (in Relativbewegung bezogen auf das Werkstück) zu Beginn des Neustarts unabhängig von der Art und Ursache der ungeplanten Unterbrechung zunächst einmal von seiner aktuellen Position nach dem Stillsetzen in eine definierte Ausgangsposition verfahren. Dabei werden zweite relative Bewegungsbahnen, mit denen dies erfolgt, anhand von Daten, die zumindest den unterbrochenen Bearbeitungsvorgang repräsentieren (insbesondere Prozessdaten, Maschinenparameter u.a.), automatisch bestimmt. Eine besondere Sachkunde der Bedienperson an der Maschine ist für das Anfahren der Ausgangsposition nicht unbedingt erforderlich.

Vorzugsweise wird die Werkzeugmaschine unabhängig von der Art und Ursache der jeweiligen Unterbrechung in eine einheitliche Ausgangsposition gebracht, von der aus die Wiederaufnahme des Produktionsprozesses generell möglich ist. In einem besonders bevorzugten Fall beinhaltet die Ausgangsposition bspw., dass die Arbeitsspindel das zuletzt gehaltene Werkzeug in dem Werkzeugmagazin ablegt und in ihre Ruheposition verfährt.

Das neue Verfahren unterscheidet sich von den bekannten Verfahren unter anderem dadurch, dass das Anfahren der Ausgangsposition den ersten automatisierten Schritt beim erneuten Start der Werkzeugmaschine darstellt. Dadurch wird erreicht, dass die Ausgangsposition unabhängig ist von der Arbeitsposition des Werkzeugträgers im Zeitpunkt der Unterbrechung und während des Stillstands. Es spielt keine Rolle, wie weit die aktuellen Achspositionen zum Zeitpunkt der Unterbrechung von der für den Neustart bevorzugten Ausgangsposition entfernt ist, da die Ausgangsposition nicht noch in den letzten Sekunden oder Sekundenbruchteilen nach der Unterbrechung, sondern erst zu Beginn des Neustarts angefahren wird, bspw. also erst nach Wiederherstellung der Energiezufuhr. An welcher relativen Position sich der Werkzeugträger unmittelbar nach dem Stillsetzen befindet, ist nur noch insoweit von Bedeutung, als dass diese Position den Startpunkt für die automatisch bestimmte zweite Bewegungsbahn bildet.

Das neue Verfahren tritt damit nicht unbedingt an die Stelle von Ansätzen der in WO 00/66320 beschriebenen Art, sondern kann sie im Gegenteil dazu sogar ergänzen. Im Zeitpunkt der Unterbrechung bzw. im unmittelbaren zeitlichen Umfeld davon wird dann vor allem versucht, das Werkzeug und/der Werkstück möglichst schnell in einer Art "Notbremsung" in eine gesicherte Position zu bringen. Da für die "Notbremsüng" nur beschränkt Zeit und ggf. Energie zur Verfügung stehen, sind die damit erreichbaren Stillstandspositionen jedoch vom konkreten Einzelfall abhängig und Beschränkungen unterworfen. Zudem sind die vorhandenen Maschinenaggregate in aller Regel nicht koordiniert, sondern allenfalls "hastig" in Sicherheit gebracht. An diesem Punkt setzt dann das neue Verfahren an und führt erfindungsgemäß dazu, dass die Maschine einfach und schnell in einen definierten Ausgangszustand gebracht wird.

Die angefahrene Ausgangsposition ist aufgrund des vorher Gesagten prinzipiell frei wählbar und sie kann daher allein darauf hin optimiert werden, dass ein besonders einfacher und schneller Neustart unter allen denkbaren Fallkonstellationen möglich ist. Bereits durch diese Optimierung lässt sich die Zeit für den Neustart verkürzen.

Zudem besitzen das neue Verfahren und die entsprechende Werkzeugmaschine den Vorteil, dass die Ausgangsposition für den Neustart entlang automatisch bestimmter zweiter Bewegungsbahnen angefahren wird. Eine ggf. langwierige Analyse der Situation nach einem Stillstand und die Auswahl einer geeigneten "Rückfahrstrategie" durch einen Bediener kann damit entfallen. Dies trägt zu einer wesentlichen Verkürzung der Stillstandszeiten bei. Eine besonders deutliche Reduktion von Stillstandszeiten ergibt sich zudem in all denjenigen Fällen, in denen ansonsten erst ein sachkundiger Bediener zu einer abgestoppten Maschine gerufen werden muss, um die Analyse der Situation sachkundig vorzunehmen.

Überraschenderweise hat sich gezeigt, dass die automatische Bestimmung der zweiten relativen Bewegungsbahnen in einer Vielzahl von praktischen Fällen allein anhand von Daten möglich ist, die aufgrund der programmierten Bearbeitungsvorgänge und der bekannten Maschinenparameter bereits in der Werkzeugmaschine vorhanden sind. Lediglich für eine vergleichsweise geringe Anzahl von Sonderfällen ist es von Vorteil, wenn zusätzliche Daten vor Aufnahme des Produktionsprozesses in der Werkzeugmaschine hinterlegt werden. Dies betrifft vor allem die Bearbeitung von besonders komplexen und/oder besonders großen Werkstücken, da in diesen Fällen der Weg des Werkzeugträgers entlang der zweiten relativen Bewegungsbahnen von Werkstückgeometrien behindert sein kann.

Verzichtet man auf die Eingabe von Zusatzdaten, können zwar möglicherweise nicht alle, jedoch zumindest ein bedeutender Teil der Situationen, in denen eine ungeplante Unterbrechung auftritt, einfach und schnell bewältigt werden. Eine praktisch vollständige Bewältigung der realistisch möglichen Szenarien ist mit einem vergleichsweise geringen Zusatzaufwand möglich, wie nachfolgend anhand einiger Ausführungsbeispiele näher erläutert wird. Insgesamt lässt sich damit jedoch unabhängig von der "Ausbaustufe" der Erfindung eine spürbare Reduktion von Stillstandszeiten und damit eine höhere Produktivität erreichen.

Die genannte Aufgabe ist damit vollständig gelöst.

In einer Weiterbildung der Erfindung hält der Werkzeugträger während der Bearbeitungsvorgänge ein Werkzeug aus einem Satz von unterschiedlichen Werkzeugen und die zweiten relativen Bewegungsbahnen werden in Abhängigkeit von demjenigen Werkzeug bestimmt, das beim Auftreten des ungeplanten Ereignisses in dem Werkzeugträger gehalten ist, so dass individuelle zweite Bewegungsbahnen durchlaufen werden, die vom Werkzeugtyp des verwendeten Werkzeugs abhängig sind. Die entsprechende Werkzeugmaschine beinhaltet dementsprechend ein Werkzeugmagazin, in dem ein Satz von verschiedenen Werkzeugen vorhaltbar ist, wobei die Startlogik so ausgebildet ist, dass die zweiten relativen Bewegungsbahnen in Abhängigkeit von demjenigen Werkzeug bestimmt werden, das beim Auftreten der ungeplanten Unterbrechung in dem Werkzeugträger gehalten ist, so dass individuelle zweite Bewegungsbahnen durchlaufen werden, die vom Werkzeugtyp des verwendeten Werkzeugs abhängig sind.

Es hat sich gezeigt, dass sich die zweiten relativen Bewegungsbahnen sehr effektiv bestimmen lassen, wenn man die Eigenschaften des zum Zeitpunkt der Unterbrechung in dem Werkzeugträger gehaltenen Werkzeuges als einen wesentlichen Faktor berücksichtigt. Handelt es sich bei dem betroffenen Werkzeug bspw. um einen Fräskopf für eine Innenkontur, ist es eine einfache und wirksame Strategie für die zweiten Bewegungsbahnen, den Innenfräser (relativ zum Werkstück) zunächst in z-Richtung zurückzuziehen, um die Spindel anschließend in die Ausgangsposition zu verfahren. Bei einem Drehwerkzeug für Vertikaldrehen mit Außenbearbeitung ist eine geeignete Strategie demgegenüber zunächst eine relative Bewegung in y-Richtung. Bei einem Gewindebohrer ist es zudem vorteilhaft, wenn nicht gar im Einzelfall notwendig, die Spindel zeitgleich mit dem Zurückziehen zu drehen.

Unterschiedliche Werkzeuge und Werkzeugtypen haben nach dieser Weiterbildung der Erfindung in aller Regel individuelle und ggf. voneinander abweichende zweite Bewegungsbahnen zur Folge. Die Anzahl von in der Steuerung der Werkzeugmaschine vorzuhaltenden Strategien zum Bestimmen der zweiten Bewegungsbahnen lässt sich in dieser Weiterbildung jedoch stark reduzieren. Die Realisierung des erfindungsgemäßen Verfahrens ist daher sehr effizient und wirkungsvoll möglich.

Besonders bevorzugt ist es, wenn die jeweils verwendeten Werkzeugtypen zu Gruppen zusammengefasst sind und wenn die zweiten Bewegungsbahnen in Abhängigkeit von einer Gruppenzugehörigkeit des verwendeten Werkzeugs bestimmt werden.

In einer weiteren Ausgestaltung werden die zweiten relativen Bewegungsbahnen aus einem Satz von vorbereiteten zweiten relativen Bewegungsbahnen ausgewählt. Vorzugsweise ist dieser Satz in der Startlogik der neuen Werkzeugmaschine abgelegt.

Diese Maßnahme stellt eine einfache praktische Realisierung dar, bei der für eine Vielzahl denkbarer Szenarien die geeignete Strategie vorbereitet und in der Werkzeugmaschine hinterlegt ist. Die zweiten Bewegungsbahnen lassen sich damit vergleichsweise schnell bestimmen. Zudem besitzt die Maßnahme den Vorteil, dass die Analysefähigkeiten eines erfahrenen Maschinenbedieners/Entwicklers auf recht einfache Weise in der Steuerung der Werkzeugmaschine abgebildet werden können. Damit ist eine Realisierung möglich, die ohne fundamentale Änderungen oder Eingriffe am bzw. im Betriebssystem der verwendeten Steuerungen auskommt. Dies ist vor allem deshalb von besonderem Vorteil, da die Hersteller von modernen Werkzeugmaschinen die Steuerungen in aller Regel als Zulieferteile beziehen und somit auf die internen Betriebsabläufe der Steuerung, d.h. das Betriebssystem, keinen unmittelbaren Zugriff haben. Der Hersteller einer Werkzeugmaschine kann das neue Verfahren daher auch ohne entsprechende Mithilfe eines Herstellers von Steuerungen realisieren.

In einer weiteren Ausgestaltung werden die zweiten Bewegungsbahnen in Abhängigkeit von ersten Parametern bestimmt, die vor einem Bearbeitungsvorgang in der ersten Steuerung, vorzugsweise in dem ersten Steuerprogramm, hinterlegt werden.

Wie bereits erwähnt, hat es sich gezeigt, dass die zweiten Bewegungsbahnen in einer Vielzahl von Fällen allein anhand von Daten bestimmt werden können, die im Betriebsablauf einer herkömmlichen Werkzeugmaschine bereits vorhanden sind. Beispiele hierfür sind die bereits weiter oben erwähnten Daten, mit denen verschiedene Werkzeugtypen voneinander unterschieden werden. In einigen Szenarien sind jedoch Zusatzdaten hilfreich, um die zweiten Bewegungsbahnen möglichst effizient bestimmen zu können. Bei einem Fräswerkzeug zum Bearbeiten einer Außenkontur ist es bspw. hilfreich zu wissen, wie viel Platz um die Außenkontur herum zur Verfügung steht, um den Fräser seitlich von der bearbeiteten Außenkontur abzuheben. Diese Information ist jedoch eng mit dem jeweils zu bearbeitenden Werkstück verknüpft, d.h. sie kann vom Entwickler der Werkzeugmaschine im vorhinein nicht allgemein bestimmt werden. Die genannte Ausgestaltung bietet jedoch die Möglichkeit, auf relativ einfache Weise auch bislang nicht benötigten, Werkstück-abhängige Informationen bei der Bestimmung der zweiten Bewegungsbahnen zu berücksichtigen. Bspw. können diese als eine Art Stützstelle für die Bestimmung der zweiten relativen Bewegungsbahn verwendet werden.

Bevorzugt werden die zusätzlichen, produktionsprozessbezogenen Informationen bei der Erstellung des NC-Programms integriert, da hier auch alle bislang schon erforderlichen, Werkstückspezifischen Daten hinterlegt werden. Mit geringem Zusatzaufwand lässt sich in dieser Ausgestaltung eine praktisch vollständige Automatisierung für den Neustart einer Werkzeugmaschine erreichen.

In einer weiteren Ausgestaltung werden die zweiten Bewegungsbahnen in Abhängigkeit von zweiten Parametern bestimmt, die in einem nicht-flüchtigen Speicher hinterlegt werden.

Es hat sich gezeigt, dass die Bestimmung der zweiten Bewegungsbahnen wesentlich erleichtert wird, wenn bestimmte Informationen, die bei einer herkömmlichen NC-Steuerung nach Abschluss eines Steuersatzes nicht mehr benötigt werden, nicht-flüchtig gesichert werden. Ein Beispiel hierfür sei der Steigungswinkel eines Gewindebohrers. Durch nicht-flüchtiges Abspeichern stehen derartige Daten auch nach einem vollständigen Energieausfall zur Verfügung und die zweiten Bewegungsbahnen können dann unter Berücksichtigung dieser Daten leichter bestimmt werden. Andererseits kann die Anzahl von bedienerseitig zusätzlich einzugebenden Informationen reduziert werden, ohne dass die Anzahl der automatisch zu bewältigenden Szenarien beeinträchtigt wird. Der bedienerseitige Komfort wird damit verbessert.

In einer weiteren Ausgestaltung werden die zweiten relativen Bewegungsbahnen anhand der im ersten Steuerprogramm definierten ersten relativen Bewegungsbahnen bestimmt. Vorteilhafterweise beinhaltet die Startlogik der Werkzeugmaschine daher einen Logikteil, mit dem die zweiten relativen Bewegungsbahnen als in Rückwärtsrichtung durchlaufenes Abbild der ersten relativen Bewegungsbahnen bestimmbar sind.

Diese Maßnahme erfordert eine Ergänzung in den Betriebssystemen der bislang angebotenen NC-Steuerungen. Die praktische Realisierung ist daher zunächst deutlich aufwendiger als die bisher beschriebenen Maßnahmen (zumindest aus Sicht eines Herstellers von Werkzeugmaschinen, der auf das Betriebssystem einer NC-Steuerung von sich aus in aller Regel keinen Zugriff hat). Andererseits besitzt die Maßnahme den Vorteil, dass sich durch vollständige Rekonstruktion der ersten Bewegungsbahnen und entsprechendes "Rückwärtelaufen" die zweiten Bewegungsbahnen in praktisch allen denkbaren Szenarien optimal bestimmen lassen. Der Automatisierungsgrad und die Effizienz lassen sich noch weiter steigern.

In einer "abgespeckten" Variante ist es jedoch auch denkbar, die zweiten Bewegungsbahnen anhand von Parametern der ersten Bewegungsbahnen zu bestimmen, ohne ein vollständiges "Rückwärtslaufen" zugrunde zu legen. Der Aufwand von Seiten der Steuerungshersteller ist dabei geringer, während sich andererseits bereits viele denkbare Szenarien für die automatische Bestimmung der zweiten Bewegungsbahnen beherrschen lassen.

In einer weiteren Ausgestaltung wird beim erneuten Inbetriebnehmen ein Bedienungsparameter eingelesen und abhängig von dem eingelesenen Bedienungsparameter wird derjenige Bearbeitungsvorgang erneut gestartet, zu dem das ungeplante Ereignis auftrat.

Durch diese Maßnahme wird auf einfache Weise erreicht, dass der Bediener der Werkzeugmaschine den ansonsten weitgehend automatisierten Neustart im Hinblick darauf beeinflussen kann, ob das bereits teilbearbeitete Werkstück fertiggestellt werden soll oder ob ein vollständig neuer Fertigungszyklus begonnen werden soll. Letzteres ist insbesondere dann wünschenswert, wenn das unerwartete Ereignis, das zum Stillstand der Werkzeugmaschine führte, eine Beschädigung oder Beeinträchtigung des gerade bearbeiteten Werkstücks zur Folge hat. Insbesondere bei Werkstücken, die extrem hohen Präzisionsanforderungen unterliegen, ist es vorteilhaft, einen vollständig neuen Bearbeitungszyklus zu starten. Wenn hingegen geringfügige Fertigungstoleranzen akzeptabel sind, lässt sich der gesamte Produktionsprozess effizienter gestalten, wenn ein bereits teilbearbeitetes Werkstück vollständig fertiggestellt wird.

In einer weiteren Ausgestaltung weist die Werkzeugmaschine ferner Hilfsaggregate auf, die in Abstimmung mit den ersten relativen Bewegungsbahnen des Werkzeugträgers angesteuert werden und beim erneuten Inbetriebnehmen werden sämtliche Hilfsaggregate in eine Ausgangsposition gesteuert, die jeweils in Abhängigkeit von dem Bearbeitungsvorgang, zu dem das ungeplante Ereignis auftrat, automatisch bestimmt wird. Vorzugsweise besitzt eine Werkzeugmaschine dabei eine zweite Steuerung zum Steuern von Hilfsaggregaten, wobei die Startlogik die erste und die zweite Steuerung zumindest bei dem Neustart nach der ungeplanten Unterbrechung koordiniert.

In dieser Ausgestaltung wird der erfindungsgemäße Ansatz zu einem übergreifenden, integrierten Gesamtkonzept ausgebaut, bei dem vorzugsweise sämtliche an den Bearbeitungsvorgängen beteiligten Haupt- und Hilfsaggregate in den automatischen Neustart eingebunden sind. Dadurch wird eine besonders komfortable Möglichkeit geschaffen, um eine komplexe Werkzeugmaschine nach einer Unterbrechung schnell und einfach wieder zu starten. Durch die Einbindung der Bewegungen der Hilfsaggregate wird die Anzahl von ansonsten erforderlichen Eingriffen einer Bedienperson noch weiter reduziert. Fehlbedienungen werden außerdem noch zuverlässiger verhindert. Besonders vorteilhaft ist dabei, wenn auch die Bewegungen der Hilfsaggregate individuell aus der "Geschichte" des unterbrochenen Bearbeitungsvorgangs bestimmt werden, d.h. in Abhängigkeit von dem unterbrochenen Bearbeitungsvorgang.

In einer weiteren Ausgestaltung wird der Werkzeugträger entlang der zweiten relativen Bewegungsbahnen mit einer niedrigeren Geschwindigkeit verfahren als entlang der ersten relativen Bewegungsbahnen.

Diese Maßnahme mag auf den ersten Blick dazu führen, dass die Stillstandszeiten der Werkzeugmaschine unnötig verlängert werden, was dem Ziel der vorliegenden Erfindung eher entgegensteht. Tatsächlich sind die Zeitverzögerungen jedoch gering im Vergleich zu den Zeitgewinnen, die mit dem neuen Ansatz grundsätzlich möglich sind. Andererseits besitzt die hier angesprochene Maßnahme den Vorteil, dass der Bediener das automatisierte Anfahren der Ausgangsposition besser überwachen und ggf. eingreifen kann, sollte aufgrund einer ungünstigen Konstellation von Umständen ein unvorhergesehenes Problem auftreten. Besonders vorteilhaft ist es, wenn die beim Durchfahren der zweiten Bewegungsbahnen verwendeten Geschwindigkeiten bedienerseitig variiert werden können, da der Bediener in diesem Fall - auch ohne spezielle Fachkenntnis über den eigentlichen Bearbeitungsvorgang - die automatisierten Abläufe gut überwachen kann, während gleichzeitig die Verzögerungszeiten minimiert werden. In einzelnen Szenarien konnten bspw. Stillstandszeiten um mehrere Stunden reduziert werden, wohingegen die Verzögerung durch Verwendung einer geringeren Geschwindigkeit im Bereich von nur wenigen Sekunden oder Minuten lag.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine erfindungsgemäße Werkzeugmaschine in einer schematischen Übersicht,
- Fig. 2: ein schematisches Funktionsblockschaltbild einer Steuereinheit der Werkzeugmaschine aus Fig. 1,
- Fig. 3: eine schematische Darstellung einer zweiten Bewegungsbahn bei einem Fräser für Innenbearbeitung,
- Fig. 4: eine schematische Darstellung einer zweiten Bewegungsbahn bei einem Fräser für Außenbearbeitung,
- Fig. 5: ein schematisches Funktionsdiagramm zur Erläuterung des Gesamtablaufs des neuen Verfahrens,
- Fig. 6: ein schematisches Funktionsdiagramm zur Erläuterung der Inbetriebnahme der Werkzeugmaschine aus Fig. 1 nach einer ungeplanten Unterbrechung,
- Fig. 7: ein schematisches Funktionsdiagramm zur Erläuterung eines bevorzugten Ausführungsbeispiels innerhalb des Verfahrens nach Fig. 6 und
- Fig. 8: ein schematisches Funktionsdiagramm zur Erläuterung eines alternativen Ausführungsbeispiels innerhalb des Verfahrens nach Fig. 6.

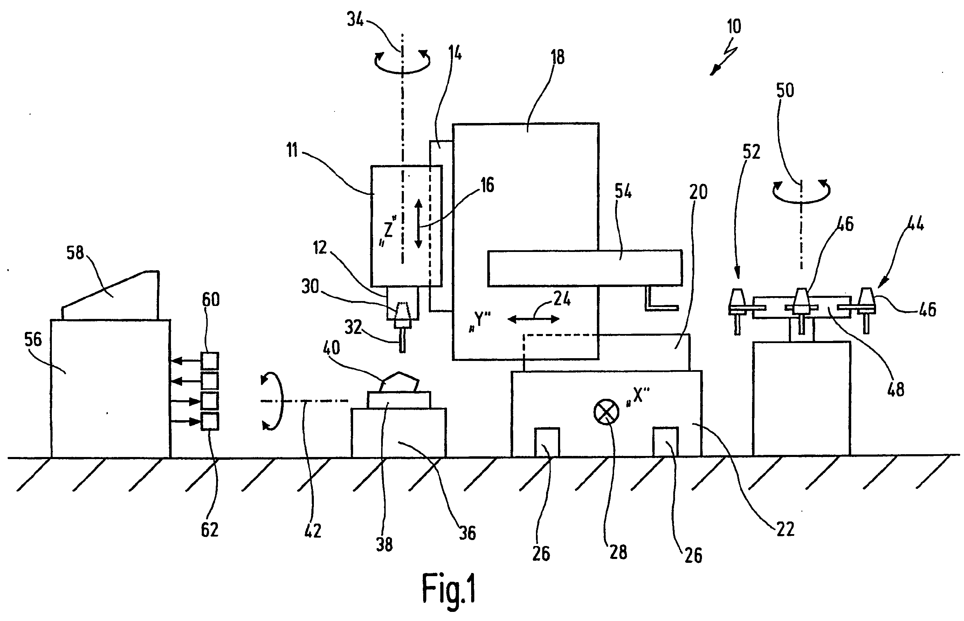

In Fig. 1 ist eine erfindungsgemäße werkzeugmaschine in ihrer Gesamtheit mit der Bezugsziffer 10 bezeichnet.

Die Werkzeugmaschine 10 besitzt einen Spindelkasten 11 mit einer Arbeitsspindel 12, die einen Werkzeugträger im Sinne der vorliegenden Erfindung darstellt. Der Spindelkasten 11 ist hier über einen ersten Führungsschlitten 14 in Richtung eines Pfeils 16 beweglich an einem Maschinenteil 18 angeordnet. Die Bewegung in Richtung des Pfeils 16 wird dabei üblicherweise als Bewegung in z-Richtung bezeichnet.

Das Maschinenteil 18 ist über einen zweiten Führungsschlitten 20 an einem weiteren Maschinenteil 22 gelagert und kann sich dementsprechend in Richtung eines Pfeils 24, d.h. in y-Richtung, bewegen. Das Maschinenteil 22 sitzt seinerseits wiederum beweglich auf Führungsschienen 26, wobei die Bewegungsrichtung (x-Richtung) senkrecht zur Papierebene in üblicher Weise mit dem Symbol 28 angedeutet ist. Insgesamt kann der Spindelkasten 11 mit der Arbeitsspindel 12 damit in alle drei Raumrichtungen und, bei entsprechender Steuerung, entlang nahezu beliebiger Bewegungsbahnen verfahren werden.

Es sei angemerkt, dass die hier gezeigte Lagerung der Arbeitsspindel 12 ein typisches (und hier vereinfachtes) Beispiel für heutige Werkzeugmaschinen darstellt. Die Erfindung ist jedoch auf diese Art der Maschinenkonstruktion nicht beschränkt und kann grundsätzlich auch bei anderen Bewegungskonzepten, bspw. bei einer sogenannten Hexapoden-Anordnung oder bei Maschinenkonzepten mit feststehendem Werkzeugträger eingesetzt werd en.

Am unteren Ende der Arbeitsspindel 12 ist eine Werkzeugaufnahme 30 angeordnet, in der ein Werkzeug 32 aufgenommen ist. Das Werkzeug 32 kann über die Arbeitsspindel 12 um die z-Achse 34 gedreht werden, was verschiedene Bearbeitungsvorgänge ermöglicht.

Mit der Bezugsziffer 36 ist ein Werkzeugtisch bezeichnet, auf dem in einer Spannvorrichtung 38 ein Werkstück 40 aufgespannt ist. Der Werkzeugtisch 36 ist im hier gezeigten Ausführungsbeispiel um eine Achse 42 verschwenkbar, was einen weiteren Freiheitsgrad bei der relativen Positionierung von Werkzeug 32 und Werkstück 40 darstellt. Auch hier sei der guten Ordnung halber darauf hingewiesen, dass die Erfindung nicht auf Werkzeugmaschinen mit einem verschwenkbaren Werkzeugtisch 36 beschränkt ist. Sie kann vielmehr auch bei Werkzeugmaschinen mit anderen beweglichen Werkstückaufnahmen, bspw. zur Bearbeitung von stangenförmigen Werkstücken, und auch bei Werkzeugmaschinen ohne bewegliche Werkstückaufnahmen, angewendet werden.

Mit der Bezugsziffer 44 ist ein Werkzeugmagazin bezeichnet, in dem eine Vielzahl von Werkzeughaltern 46 bevorratet ist. Jeder Werkzeughalter 46 hält ein für einen Bearbeitungsvorgang vorgesehenes Werkzeug, das mit Hilfe des Werkzeughalters 46 in die Werkzeugaufnahme 30 der Spindel 12 eingespannt werden kann. Die Werkzeughalter 46 sind im hier gezeigten Ausführungsbeispiel an einer Kette 48 angeordnet, die um eine Achse 50 verfahren werden kann. Damit kann jeder Werkzeughalter 46 in eine für einen Werkzeugwechsel geeignete Übergabeposition 52 gebracht werden. Mit Hilfe eines hier nur schematisch dargestellten Werkzeugwechslers 54 kann ein in der Arbeitsspindel 12 gehaltener Werkzeughalter gegen einen aus dem Magazin 44 ausgetauscht werden.

Wiederum der Vollständigkeit halber sei darauf hingewiesen, dass anstelle des hier gezeigten Werkzeugmagazins mit Kettenförderer auch andere Magazinkonzepte zur Anwendung gelangen können. Darüber hinaus sind der verschwenkbare Werkzeugtisch 36 und das Werkzeugmagazin 44 mit Werkzeugwechsler 54 hier als typische Beispiele von Hilfsaggregaten dargestellt, die im Betriebsablauf der Werkzeugmaschine 10 mit den Bewegungen der Arbeitsspindel 12 koordiniert werden müssen. Weitere Hilfsaggregate sind bspw. Druckluftkompressoren, Kühlmittelpumpen und weitere Dreh- oder Schwenkantriebe.

Mit der Bezugsziffer 56 ist eine Steuereinheit bezeichnet, in der hier in üblicher Weise die Steuerfunktionalitäten einer NC-Steuerung und einer SPS implementiert sind. Mit Bezugsziffer 58 ist ein Bedienpult der Steuereinheit 56 bezeichnet.

Die Steuereinheit 56 nimmt Zustandssignale 60 von diversen Sensoren an der Werkzeugmaschine 10 auf und generiert in Abhängigkeit davon Steuersignale 62, mit denen die Bearbeitungsvorgänge gesteuert werden.

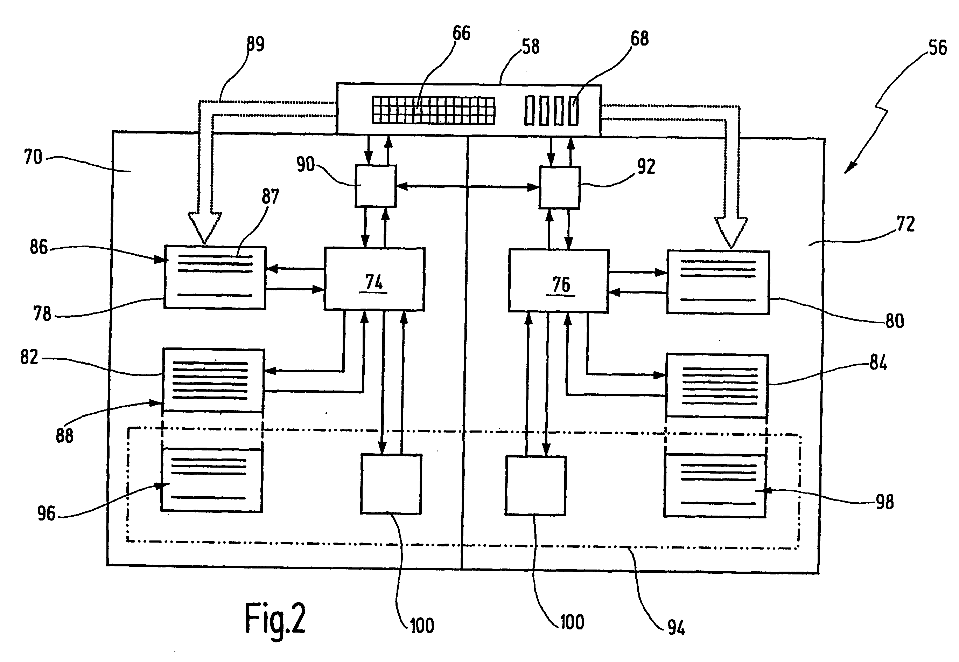

In Fig. 2 sind die beiden Funktionseinheiten der Steuereinheit 56 schematisch gegliedert dargestellt. Es versteht sich jedoch, dass dieser Aufbau nur eine mögliche typische Realisierung zeigt und dass die gezeigten Funktionsgruppen auch in anderen Kombinationen realisiert werden können. Grundsätzlich ist es auch möglich, die gesamte Steuerfunktionalität der Steuereinheit 56 auf einem herkömmlichen PC zu realisieren. Der hier dargestellte, zweiteilige Funktionsaufbau kann dann auch mit nur einem Prozessor und einem gemeinsamen Speicher realisiert sein.

Das Bedienpult 58 beinhaltet u.a. eine Tastatur 66 zur Dateneingabe sowie einen hier nicht gezeigten Bildschirm zur Anzeige von Funktionszuständen und Ausgabe sonstiger Daten. Darüber hinaus sind hier schematisch einige Schnittstellen 68 angedeutet, über die beispielsweise ein NC-Steuerprogramm eingelesen werden kann.

Wie bereits erwähnt, beinhaltet die Steuereinheit 56 eine zweigeteilte Funktionalität, nämlich eine an sich bekannte NC-Steuerung 70 zum Steuern der Arbeitsbewegungen der Spindel 12 sowie eine SPS zum Steuern aller übrigen Arbeitsbewegungen und vorgänge. Beide Steuerungen besitzen, zumindest wenn sie auf unterschiedlichen Hardwareplattformen realisiert sind, jeweils zumindest einen Prozessor 74, 76, einen Arbeitsspeicher 78, 80 sowie Festwertspeicher 82, 84. Im Arbeitsspeicher 78 der NC-Steuerung 70 ist u.a. das NC-Programm 86 abgelegt, das mit einer Vielzahl von aufeinanderfolgend auszuführenden Steuersätzen 87 die Arbeitsbewegungen der Spindel 12 bestimmt. Im Festspeicher 82 ist hingegen das Betriebssystem 88 der NC-Steuerung 70 abgelegt. Hierauf hat der Bediener einer Werkzeugmaschine in aller Regel keinen Einfluss, während er das NC-Programm 86 selbst generiert und in den Arbeitsspeicher 78 lädt. Dies ist in Fig. 2 mit einem Pfeil 89 angedeute t.

Mit den Bezugsziffern 90 und 92 sind zwei E/A-Module bezeichnet, mit deren Hilfe die Prozessoren 74, 76 Daten einlesen und ausgeben können. Unter anderem erfolgt über diese Schnittstellen hier auch ein Datenaustausch zwischen der NC-Steuerung 70 und der SPS 72.

Mit der Bezugsziffer 94 ist eine Startlogik angedeutet, mit deren Hilfe das neue Verfahren zur erneuten Inbetriebnahme der Werkzeugmaschine 10 hier realisiert ist. Die Startlogik 94 beinhaltet Programmmodule 96, 98, die sowohl auf Funktionalitäten der NC-Steuerung 70 als auch Funktionalitäten der SPS 72 zurückgreifen. Ferner beinhaltet die Startlogik 94 hier nichtflüchtige Speicher 100 zum Abspeichern von Parametern, die die Bestimmung der zweiten Bewegungsbahnen erleichtern.

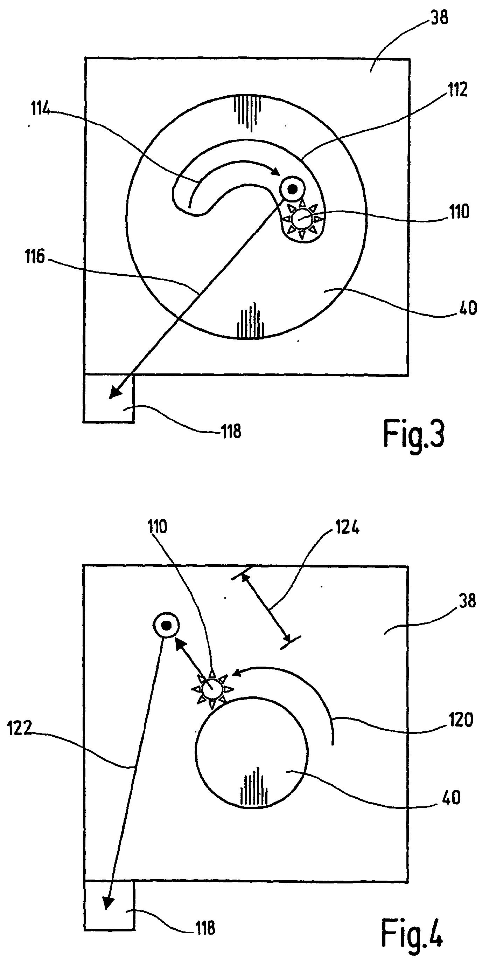

In den Fig. 3 und 4 sind zur Verdeutlichung des erfindungsgemäßen Verfahrens zwei Beispiele von Bewegungsabläufen dargestellt. Es handelt sich dabei um eine schematische Draufsicht auf die Spannvorrichtung 38, auf der ein Werkstück 40 aufgespannt ist. In Fig. 3 wird das Werkstück 40 beispielhaft mit einem Fräskopf 110 bearbeitet, um eine Innenkontur 112 zu fräsen. Der Fräskopf 110 wird dabei entlang einer ersten (relativen) Bewegungsbahn 114 geführt und zwar anhand von Steuersätzen 87, die in der NC-Steuerung 70 hinterlegt sind.

Tritt nun eine ungeplante Unterbrechung des Bearbeitungsvorgangs auf, bspw. infolge eines Not-Aus-Befehls oder einer Unterbrechung der Energiezufuhr, befindet sich die Werkzeugmaschine 10 in einem nicht definierten Zustand. Vorzugsweise beinhaltet die Werkzeugmaschine 10 allerdings Notfall-Routinen, mit denen der Fräskopf 110 bei Auftreten des ungeplanten Ereignisses in einer Art Notbremsung abgestoppt werden kann, wie dies bspw. aus der bereits eingangs genannten WO 00/66320 bekannt ist. Dies ist für die Realisierung des neuen Verfahrens jedoch nicht zwingend erforderlich.

Nach dem neuen Verfahren wird der Fräskopf 110 nun unabhängig davon, ob er während einer kontrollierten Notbremsung abgestoppt wurde oder aufgrund des unerwarteten Ereignisses unkontrolliert angehalten wurde, entlang einer automatisch bestimmten zweiten Bewegungsbahn 116 in eine definierte Ausgangsposition 118 verfahren. Im vorliegenden Beispiel beinhaltet die zweite Bewegungsbahn, dass der Fräskopf 110 (mit Hilfe der Spindel 12) zunächst in z-Richtung aus dem Werkstück 40 herausgefahren wird. Anschließend wird der Fräskopf 110 kontrolliert zu der Ausgangsposition 118 verfahren. In einem besonders bevorzugten Ausführungsbeispiel ist die definierte Ausgangsposition 118 das Werkzeugmagazin 44, da die Werkzeugmaschine 10 hierdurch in einen sehr vorteilhaften Grundzustand versetzt wird. Zudem erlaubt die Ablage des Fräskopfes 110 im Werkzeugmagazin 44 eine einfache Kontrolle des Fräskopfes 110 auf Beschädigungen. Grundsätzlich kann die Ausgangsposition 118 jedoch auch in anderer Weise festgelegt sein.

Fig. 4 zeigt ein anderes Szenario unter ansonsten gleichen Annahmen des Betriebsablaufs. Im Unterschied zu Fig. 3 wird das Werkstück 40 hier jedoch mit einem Fräskopf 110 an seiner Außenseite bearbeitet, d.h. es wird eine Außenkontur entlang einer ersten Bewegungsbahn 120 gefräst. Für einen solchen Fall hat es sich als eine vorteilhafte Strategie erwiesen, den Fräskopf 110 bei der erneuten Inbetriebnahme der Werkzeugmaschine 10 in Radialrichtung vom Werkstück 40 abzuheben. Anschließend erst erfolgt das Zurückziehen des Fräskopfes 110 in z-Richtung sowie das sich daran anschließende Verfahren in die Ausgangsposition 118. Die entsprechende zweite Bewegungsbahn ist in Fig. 4 mit der Bezugsziffer 122 bezeichnet.

Wie anhand der Fig. 3 und 4 leicht nachzuvollziehen ist, unterscheiden sich die zweiten Bewegungsbahnen 116 und 122, da im Fall der Fig. 3 direkt ein Zurückfahren des Fräskopfes 110 in z-Richtung erfolgt, wohingegen bei dem Szenario gemäß Fig. 4 zunächst ein radiales Abheben des Fräskopfes 110 von dem Werkstück 40 durchgeführt wird. Die Bestimmung der zweiten Bewegungsbahn 116, 122 hängt damit von dem Bearbeitungsvorgang ab, zu dem die ungeplante Unterbrechung des Produktionsvorgangs auftrat.

Im Fall der Fig. 4 lässt sich die geeignete zweite Bewegungsbahn 122 besonders effektiv bestimmen, wenn die Startlogik 94 eine Information darüber hat, wie weit der Fräskopf 110 von der Außenkontur des Werkstücks 40 abgehoben werden kann. Der entsprechende Abstand ist in Fig. 4 bei der Bezugsziffer 124 angedeutet. Bevorzugt wird der zur Verfügung stehende Platz daher für Fälle der in Fig. 4 gezeigten Art als Parameter hinterlegt, und zwar insbesondere in dem NC-Programm 87.

In einem vorteilhaften Ausführungsbeispiel sind in der Startlogik 94 verschiedene Steuersätze für vorbereitete zweite Bewegungsbahnen 116, 122 hinterlegt. Der jeweils geeignete Steuersatz wird dann in Abhängigkeit von dem Szenario, zu dem die ungeplante Unterbrechung auftrat, ausgewählt. Eine besonders bevorzugte Auswahl berücksichtigt dabei die jeweils verwendeten Werkzeugtypen, die zu geeigneten Gruppen zusammengefasst sind. In einem Ausführungsbeispiel erfolgt die Auswahl der zweiten Bewegungsbahnen auszugsweise folgendermaßen:

| **Werkzeugtyp/Szenario** | **Strategie** |
|---|---|
| Fräswerkzeuge, Gruppe 100-121, 146, 155, 156 | In z-Richtung zurückziehen, Ablage in Werkzeugmagazin |
| Bohrer, Gruppe 200 -231, 250 | |
| Drehwerkzeuge für Horizontaldrehen, Gruppe 500 | |
| Gewindebohrer, Gruppe 240-242 | In z-Richtung zurückziehen, dabei Synchronlauf der Arbeitsspindel entsprechend der Gewindesteigung, Ablegen in Werkzeugmagazin |
| Fräser für Innenbearbeitung, Gruppe 145, 150 | Anfahren einer Freifahrposition, in z-Richtung zurückziehen, Ablage in Werkzeugmagazin |
| Drehwerkzeuge für Vertikaldrehen, Innenbearbeitung, Gruppe 500-540 | |
| Fräser für Außenbearbeitung, Gruppe 145, 150 | Radiales Abheben von Außenkontur, in z-Richtung zurückziehen, Ablage in Werkzeugmagazin |
| Drehwerkzeuge für Vertikaldrehen mit Außenbearbeitung, Gruppe 500-540 | In y-Richtung zurückziehen, Ablage in Werkzeugmagazin |
| Verbleibende Szenarien | Bewegungsbahn mit vordefinierten Stützstellen abfahren, Ablage in Werkzeugmagazin |

Die angegebenen Gruppenbezeichnungen lehnen sich dabei an die verbreitete Klassifizierung an, die bei NC-Steuerung der Firma Siemens, Deutschland, für die Werkzeugverwaltung verwendet werden. Es versteht sich, dass davon abweichend jedoch auch andere Klassifizierungssysteme verwendet werden können.

Parallel zu den Funktionalitäten der NC-Steuerung 70 erfolgt in einem besonders bevorzugten Ausführungsbeispiel eine koordinierte Ansteuerung aller Hilfsaggregate, insbesondere des Werkzeugmagazins 44, in dem die Werkzeuge jeweils als Ausgangsposition abgelegt werden. Dabei ist es ggf. erforderlich, Hydraulikkolben und andere Antriebe zunächst in eine definierte Position zu fahren, um von dort aus die Bewegungsabläufe mit den Bewegungen der Arbeitsspindel zu koordinieren.

Anhand der nachfolgenden Flussdiagramme werden bevorzugte Ausführungsbeispiele des erfindungsgemäßen Verfahrens weiter erläutert.

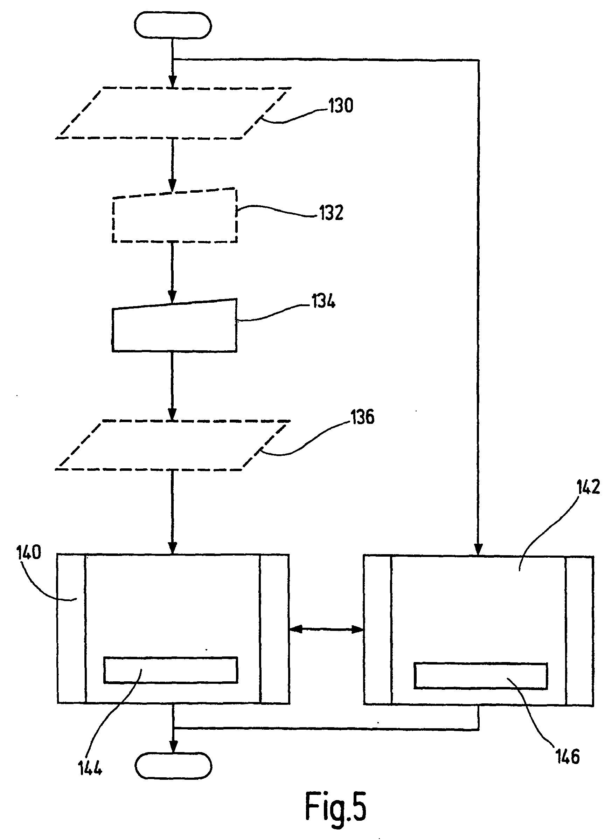

Fig. 5 zeigt einen Überblick über den gesamten Betriebsablauf der Werkzeugmaschine 10. In einem ersten Schritt 130 werden hier zunächst Steuersätze für vorbereitete zweite Bewegungsbahnen 116, 122 entsprechend den gerade erläuterten Szenarien eingelesen. Bevorzugt sind diese vorbereiteten zweiten Bewegungsbahnen allerdings von Seiten des Maschinenherstellers im Festspeicher 82 der NC-Steuerung 70 hinterlegt. In den Schritten 132 und 134 erfolgt sodann die Eingabe von Stützstellen sowie das Einladen des für den Bearbeitungsvorgang an sich vorgesehenen NC-Programms 86. Die Eingabe der Stützstellen gemäß Schritt 132 erfolgt vorteilhafterweise, um die in der oben angegebenen Tabelle zuletzt genannte "Auffangstrategie" durchführen zu können. Wird auf die Eingabe von Stützstellen gemäß Schritt 132 verzichtet, ist es nicht möglich, die Auffangstrategie durchzuführen. Es können jedoch die anderen Strategien abhängig von dem Szenario durchgeführt werden, das zum Zeitpunkt der ungeplanten Unterbrechung vorliegt. Auch in dieser reduzierten Implementierung des neuen Verfahrens wird bereits eine spürbare Reduktion von Stillstandszeiten erreicht.

Die Schritte 132 (Einlesen der Stützstellen) und 134 (Einlesen des NC-Programms) können abweichend von der hier gezeigten Darstellung auch zu einem Schritt kombiniert werden, indem die Stützstellen in das abzuarbeitende NC-Programm 86 eingefügt werden. Je nach Realisierung ist auch eine getrennte, jedoch umgekehrte Reihenfolge möglich.

Im Schritt 136 werden alle Daten, die im NC-Programm 86 zur Steuerung der ersten Bewegungsbahnen 114, 120 vorhanden sind und die für eine geeignete Bestimmung der zweiten Bewegungsbahnen 116, 122 förderlich sind, in dem nicht-flüchtigen Speicher 100 abgespeichert. Anschließend erfolgt in den Programmblöcken 140, 142 die Aufnahme der Bearbeitungsvorgänge. Der Programmblock 140 symbolisiert dabei die Abarbeitung der einzelnen Steuersätze im Rahmen des NC-Programms 86, während der Programmblock 142 die parallel dazu laufende Abarbeitung der Steuerbefehle in der SPS darstellt. Durch einen Pfeil ist angedeutet, dass zwischen den beiden Programmblöcken ein Datenaustausch zu gegenseitigen Koordination erfolgen kann. Mit den Bezugsziffern 144, 146 sind Notfallroutinen schematisch angedeutet, die im Rahmen dieser Steuerungen bei Auftritt eines ungeplanten Ereignisses abgearbeitet werden. Mit Hilfe der Notfallroutinen wird die Werkzeugmaschine bei Auftreten eines ungeplanten Ereignisses stillgesetzt.

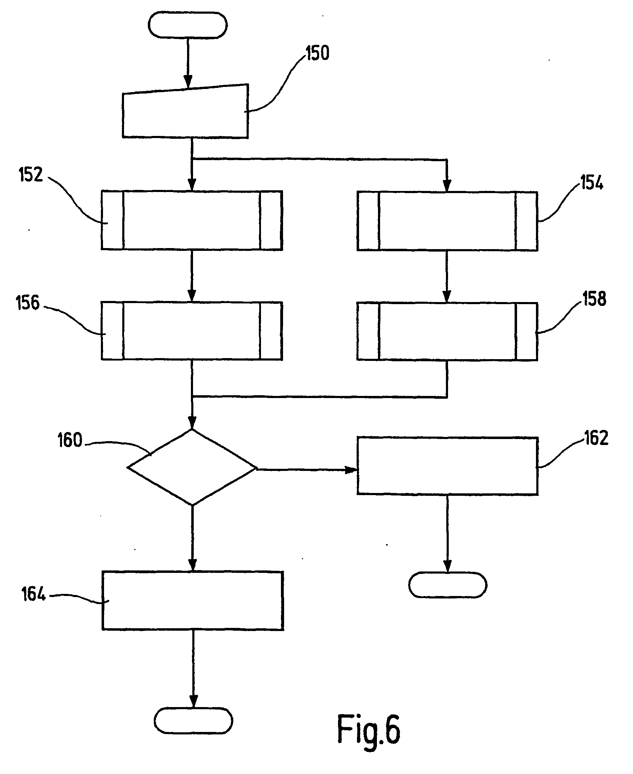

Fig. 6 zeigt den Betriebsablauf, nachdem die Werkzeugmaschine 10 mit Hilfe der Notfallroutinen 144, 146 stillgesetzt wurde.

Im Schritt 150 wird zunächst ein Startbefehl eingelesen, der vom Maschinenbediener erzeugt wird, um den Start der Werkzeugmaschine 10 einzuleiten. In den Programmblöcken 152, 154 erfolgt dann die Bestimmung von zweiten Bewegungsbahnen, und zwar hier bevorzugt parallel sowohl für die Arbeitsspindel 12 (allgemeiner gesagt für alle NC-Achsen) als auch für die etwaige Hilfsaggregate der Werkzeugmaschine 10. Anschließend werden die Arbeitsspindel 12 und die Hilfsaggregate in ihre definierten Ausgangspositionen gebracht, was anhand der Programmblöcke 156, 158 verdeutlicht ist. Im Programmschritt 160 erfolgt dann eine Entscheidung darüber, ob der unterbrochene Bearbeitungsvorgang an dem teilbearbeiteten Werkstück fortgesetzt werden soll oder ob ein neuer Produktionszyklus mit einem neuen Werkstück begonnen werden soll. Abhängig davon steigt die Steuerung dann bei dem NC-Steuersatz ein, bei dem die Unterbrechung erfolgte (Schritt 162) oder es wird mit dem ersten NC-Steuersatz begonnen (Schritt 164).

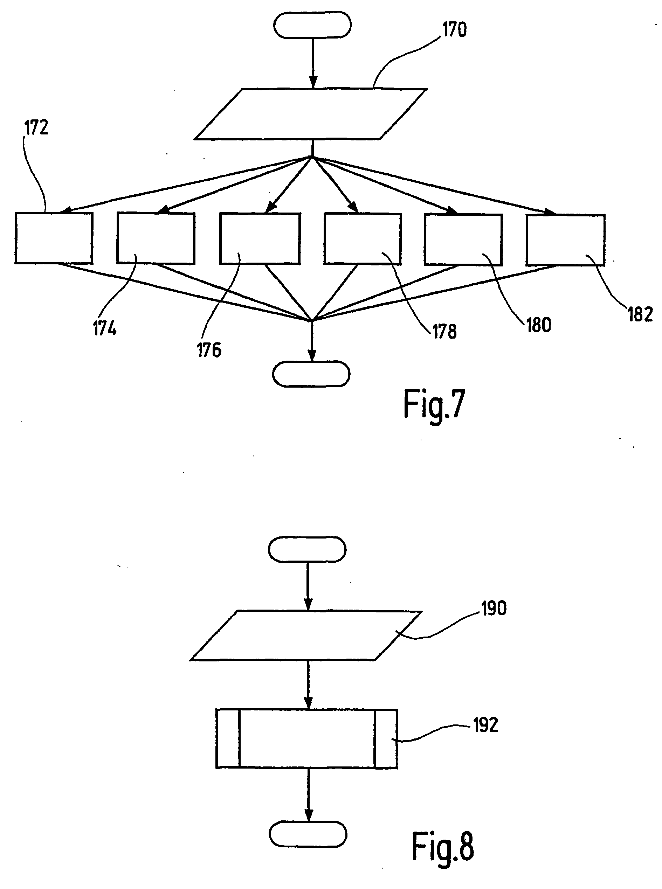

Fig. 7 verdeutlicht ein bevorzugtes Ausführungsbeispiel zum Bestimmen der zweiten Bewegungsbahnen. Gemäß Schritt 170 wird dabei zunächst der Werkzeugtyp und das Szenario bestimmt, zu dem die Unterbrechung aufgetreten ist. Anschließend erfolgt eine Fallunterscheidung, mit der Steuersätze für eine geeignete zweite Bewegungsbahn aus einer Vielzahl von vorbereiteten Steuersätzen ausgewählt werden. In einem bevorzugten Ausführungsbeispiel erfolgt die Auswahl unter den in der weiter oben angegebenen Tabelle erläuterten Strategien. Die alternativen Strategien sind dabei in Fig. 7 mit den Bezugsziffern 172, 174, 176, 178, 180 und 182 bezeichnet. Nach Auswahl der geeigneten Strategie werden die Arbeitsspindel 12 und das darin gehaltene Werkzeug 32 entlang der vordefinierten zweiten Bewegungsbahnen in die Ausgangsposition 118 gebracht.

Ein anderes bevorzugtes Ausführungsbeispiel ist in Fig. 8 dargestellt. Dabei wird im Schritt 190 wiederum das Szenario bestimmt, zu dem die unerwartete Unterbrechung aufgetreten ist. Anschließend erfolgt im Programmblock 192 die Bestimmung der zweiten Bewegungsbahn anhand der bis zum Zeitpunkt der Unterbrechung durchlaufenen Bearbeitungsschritte. Mit anderen Worten wird die zweite Bewegungsbahn hiernach bestimmt, indem die bislang durchlaufenen ersten Bewegungsbahnen rückwärts durchlaufen werden. Die entsprechenden Steuerdaten können dabei aus dem nicht-flüchtig gesicherten NC-Programm 86 generiert werden.

## Patentansprüche

1. Verfahren zum Betreiben einer Werkzeugmaschine (10), die einen relativ zu einem Werkstück (40) beweglichen Werkzeugträger (12) sowie eine erste Steuerung (56, 70) zum Steuern einer relativen Arbeitsbewegung des Werkzeugträgers (12) bezogen auf das Werkstück (40) aufweist, mit den Schritten:
- Steuern von ersten relativen Bewegungsbahnen (114, 120) des Werkzeugträgers (12) mit Hilfe eines in die erste Steuerung (56, 70) geladenen ersten Steuerprogramms (86), das eine Reihe von aufeinanderfolgend vorgesehenen Bearbeitungsvorgängen definiert,
- Stillsetzen (144, 146) der relativen Arbeitsbewegungen des Werkzeugträgers (12) bei Auftreten eines ungeplanten Ereignisses, und
- erneutes Starten von ersten relativen Arbeitsbewegungen des Werkzeugträgers (12) von einer Ausgangsposition (118) aus,
wobei der Werkzeugträger (12) entlang von definierten zweiten relativen Bewegungsbahnen (116, 122) in die Ausgangsposition (118) verfahren wird, und wobei die zweiten relativen Bewegungsbahnen (116, 122) in Abhängigkeit von dem Bearbeitungsvorgang, zu dem das ungeplante Ereignis auftrat, automatisch bestimmt werden,
**dadurch gekennzeichnet, dass** der Werkzeugträger (12) zu Beginn des Neustarts zunächst einmal von seiner aktuellen Position nach dem Stillsetzen (144, 146) entlang der zweiten Bewegungsbahnen (116, 122) in die Ausgangsposition (118) verfahren wird.

2. Verfahren nach Anspruch 1, **dadurch gekennzeichnet, dass** der Werkzeugträger (12) während der Bearbeitungsvorgänge ein Werkzeug (32) aus einem Satz (44) von unterschiedlichen Werkzeugen (46) hält und dass die zweiten relativen Bewegungsbahnen (116, 122) in Abhängigkeit von demjenigen Werkzeug (32) bestimmt werden, das beim Auftreten des ungeplanten Ereignisses in dem Werkzeugträger (12) gehalten ist, so dass individuelle zweite Bewegungsbahnen (116, 122) durchlaufen werden, die vom Werkzeugtyp des verwendeten Werkzeugs abhängig sind.

3. Verfahren nach Anspruch 1 oder 2, **dadurch gekennzeichnet, dass** die jeweils verwendeten Werkzeugtypen zu Gruppen zusammengefasst sind und dass die zweiten Bewegungsbahnen (116, 122) in Abhängigkeit von einer Gruppenzugehörigkeit des verwendeten Werkzeugs bestimmt werden.

4. Verfahren nach einem der Ansprüche 1 bis 3, **dadurch gekennzeichnet, dass** die zweiten relativen Bewegungsbahnen (116, 122) aus einem Satz (172-182) von vorbereiteten zweiten relativen Bewegungsbahnen (116, 122) ausgewählt werden.

5. Verfahren nach einem der Ansprüche 1 bis 4, **dadurch gekennzeichnet, dass** die zweiten relativen Bewegungsbahnen (116, 122) in Abhängigkeit von ersten Parametern bestimmt werden (132), die vor einem Bearbeitungsvorgang in der ersten Steuerung (56, 70), vorzugsweise in dem ersten Steuerprogramm (86), hinterlegt werden.

6. Verfahren nach einem der Ansprüche 1 bis 5, **dadurch gekennzeichnet, dass** die zweiten relativen Bewegungsbahnen (116, 122) in Abhängigkeit von zweiten Parametern bestimmt werden (136), die in einem nicht-flüchtigen Speicher (100) hinterlegt werden.

7. Verfahren nach einem der Ansprüche 1 bis 6, **dadurch gekennzeichnet, dass** die zweiten relativen Bewegungsbahnen (116, 122) anhand der im ersten Steuerprogramm (86) definierten ersten relativen Bewegungsbahnen (114, 120) bestimmt werden.

8. Verfahren nach Anspruch 7, **dadurch gekennzeichnet, dass** die zweiten relativen Bewegungsbahnen (116, 122) als ein in Rückwärtsrichtung durchlaufenes Abbild der ersten relativen Bewegungsbahnen (114, 120) bestimmt werden.

9. Verfahren nach einem der Ansprüche 1 bis 8, **dadurch gekennzeichnet, dass** beim erneuten Starten ein Bedienungsparameter eingelesen wird (170) und dass abhängig von dem eingelesenen Bedienungsparameter derjenige Bearbeitungsvorgang erneut gestartet wird (160), zu dem das ungeplante Ereignis auftrat.

10. Verfahren nach einem der Ansprüche 1 bis 9, **dadurch gekennzeichnet, dass** die Werkzeugmaschine (10) ferner Hilfsaggregate (36, 44) aufweist, die in Abstimmung mit den ersten relativen Bewegungsbahnen (114, 120) des Werkzeugträgers (12) angesteuert werden, und dass beim erneuten Starten ferner sämtliche Hilfsaggregate (36, 44) in eine jeweilige Ausgangsposition gebracht werden, die jeweils in Abhängigkeit von dem Bearbeitungsvorgang, zu dem das ungeplante Ereignis auftrat, automatisch bestimmt wird.

11. verfahren nach Anspruch 10, **dadurch gekennzeichnet, dass** Bewegungsabläufe der Hilfsaggregate (36, 44) mit Hilfe einer zweiten Steuerung (72) gesteuert werden und dass die erste und die zweite Steuerung (70, 72) mittels einer Startlogik (94) koordiniert werden.

12. Verfahren nach einem der Ansprüche 1 bis 11, **dadurch gekennzeichnet, dass** der Werkzeugträger (12) entlang der zweiten relativen Bewegungsbahnen (116, 122) mit einer niedrigeren Geschwindigkeit verfahren wird, als entlang der ersten relativen Bewegungsbahnen.

13. Werkzeugmaschine, insbesondere zur spanabhebenden Bearbeitung von metallischen Werkstücken (40), mit einem relativ zu einem Werkstück (40) beweglichen Werkzeugträger (12) und mit einer ersten Steuerung (56, 70), die mit Hilfe eines ersten, eine Reihe von aufeinanderfolgenden Bearbeitungsvorgängen definierenden Steuerprogramms (86) erste relative Bewegungsbahnen (114, 120) des Werkzeugträgers (12) steuert, ferner mit einer Logik (94), die so ausgebildet ist, dass der Werkzeugträger (12) nach einer ungeplanten Unterbrechung der Bearbeitungsvorgänge entlang von definierten zweiten relativen Bewegungsbahnen (116, 122) in eine Ausgangsposition (118) verfahrbar ist, wobei die zweiten relativen Bewegungsbahnen (116, 122) in Abhängigkeit von dem Bearbeitungsvorgang, zu dem die Unterbrechung auftrat, automatisch bestimmt werden, **dadurch gekennzeichnet, dass** die Logik (94) eine Startlogik ist, die den Werkzeugträger (12) beim erneuten Starten der Werkzeugmaschine zunächst von seiner aktuellen Position nach der ungeplanten Unterbrechung entlang der zweiten Bewegungsbahnen (116, 122) in die Ausgangsposition (118) verfährt.

14. Werkzeugmaschine nach Anspruch 13, **gekennzeichnet durch** ein Werkzeugmagazin (44), in dem ein Satz von verschiedenen Werkzeugen (46) für den Werkzeugträger (12) vorhaltbar ist, wobei die Startlogik (94) so ausgebildet ist, dass die zweiten relativen Bewegungsbahnen (116, 122) in Abhängigkeit von demjenigen Werkzeug (32) bestimmt werden, das beim Auftreten der ungeplanten Unterbrechung in dem Werkzeugträger (12) gehalten ist, so dass individuelle zweite Bewegungsbahnen (116, 122) durchlaufen werden, die vom Werkzeugtyp des verwendeten Werkzeugs abhängig sind.

15. Werkzeugmaschine nach Anspruch 13 oder 14, **dadurch gekennzeichnet, dass** die jeweils verwendeten Werkzeugtypen zu Gruppen zusammengefasst sind und dass die zweiten Bewegungsbahnen (116, 122) in Abhängigkeit von einer Gruppenzugehörigkeit des verwendeten Werkzeugs bestimmbar sind.

16. Werkzeugmaschine nach einem der Ansprüche 13 bis 15, **dadurch gekennzeichnet, dass** die Startlogik (94) einen Satz von auswählbaren Steuermodulen (172-182) für vorbereitete zweite relative Bewegungsbahnen (116, 122) beinhaltet.

17. Werkzeugmaschine nach einem der Ansprüche 13 bis 16, **dadurch gekennzeichnet, dass** die Startlogik (94) einen Logikteil (192) beinhaltet, mit dem die zweiten relativen Bewegungsbahnen (116, 122) als in Rückwärtsrichtung durchlaufenes Abbild der ersten relativen Bewegungsbahnen (114, 120) bestimmbar sind.

18. werkzeugmaschine nach einem der Ansprüche 13 bis 17, **gekennzeichnet durch** eine zweite Steuerung (72) zum Steuern von Hilfsaggregaten (36, 44), wobei die Startlogik (94) die erste und die zweite Steuerung (70, 72) zumindest bei einem Neustart nach der ungeplanten Unterbrechung koordiniert.

19. Betriebsprogrammmodul für eine Werkzeugmaschine, mit Programmcodemitteln, um alle Schritte eines Verfahrens nach einem der Ansprüche 1 bis 12 durchzuführen, wenn das Programm auf einer werkzeugmaschinensteuerung ausgeführt wird.

20. Computerprogrammprodukt mit einem Datenträger, auf dem ein Betriebsprogrammmodul nach Anspruch 19 abgespeichert ist.

## Claims

1. Method for operating a machine tool (10) which has a tool carrier (12) that can be moved relative to a workpiece (40) and also a first controller (56, 70) for controlling a relative operating movement of the tool carrier (12) in relation to the workpiece (40), comprising the steps:
- controlling first relative trajectories (114, 120) of the tool carrier (12) by means of a first control program (86) loaded into the first controller (56, 70), which control program defines a series of machining operations envisaged as following one another,
- stopping (144, 146) the relative operating movements of the tool carrier (12) if an unplanned event occurs, and
- restarting of first relative operating movements of the tool carrier (12) again from a starting position (118),
wherein the tool carrier (12) is moved along defined second relative trajectories (116, 122) into the starting position (118), the second relative trajectories (116, 122) being determined automatically as a function of the machining operation in which the unplanned event occurred,
**characterized in that** the tool carrier (12) is firstly moved from its current position after stopping (144, 146) into the starting position (118) along the second trajectories (116, 122) at the beginning of the restart.

2. Method according to claim 1, **characterized in that** during the machining operations the tool carrier (12) holds a tool (32) from a set (44) of different tools (46), and **in that** the second relative trajectories (116, 122) are determined as a function of that tool (32) which is held in the tool carrier (12) when the unplanned event occurs, so that individual second trajectories (116, 122) which depend on the tool type of the tool used are run through.

3. Method according to claim 1 or 2, **characterized in that** the tool types respectively used are combined into groups, and **in that** the second trajectories (116, 122) are determined on the basis of group membership of the tool used.

4. Method according to one of claims 1 to 3, **characterized in that** the second relative trajectories (116, 122) are selected from a set (172-182) of prepared second relative trajectories (116, 122).

5. Method according to one of claims 1 to 4, **characterized in that** the second relative trajectories (116, 122) are determined (132) on the basis of first parameters, which are stored in the first controller (56, 70), preferably in the first control program (86), before a machining operation.

6. Method according to one of claims 1 to 5, **characterized in that** the second relative trajectories (116, 122) are determined (136) on the basis of second parameters, which are stored in a non-volatile memory (100).

7. Method according to one of claims 1 to 6, **characterized in that** the second relative trajectories (116, 122) are determined on the basis of the first relative trajectories (114, 120) defined in the first control program (86).

8. Method according to claim 7, **characterized in that** the second relative trajectories (116, 122) are determined as an image of the first relevant trajectories (114, 120) run through in the reverse direction.

9. Method according to one of claims 1 to 8, **characterized in that**, at a new start-up, an operating parameter is read in (117), and **in that**, depending on the operating parameter read **in, that** machining operation in which the unplanned event occurred is started again (160).

10. Method according to one of claims 1 to 9, **characterized in that** the machine tool (10) also has auxiliary units (36, 44) which are driven in coordination with the first relative trajectories (114, 120) of the tool carrier (12), and **in that**, at a new start-up, all the auxiliary units (36, 44) are also brought into a respective starting position which is determined automatically in each case on the basis of the machining operation in which the unplanned event occurred.

11. Method according to claim 10, **characterized in that** trajectories of the auxiliary units (36, 44) are controlled by means of a second controller (72), and **in that** the first and the second controller (70, 72) are coordinated by means of a starting logic (94).

12. Method according to one of claims 1 to 11, **characterized in that** the tool carrier (12) is moved along the second relative trajectories (116, 122) at a lower speed than along the first relative trajectories.

13. Machine tool, in particular for machining metallic workpieces (40) by removing material, having a tool carrier (12) that can be moved relative to the workpiece (40) and having a first controller (56, 70) which, by means of a first control program (86) defining a series of successive machining operations, controls first relative trajectories (114, 120) of the tool carrier (12), further having a logic (94) which is constructed such that, after an unplanned interruption to the machining operations, the tool carrier (12) can be moved along defined second relative trajectories (116, 122) into a starting position (118), the second relative trajectories (116, 122) being determined automatically on the basis of the machining operation in which the interruption occurred, **characterized in that** the logic (94) is a starting logic which, at a new start-up of the machine tool after the unplanned interruption, firstly moves the tool carrier (12) along the second trajectories (116, 122) from its current position into the starting position (118).

14. Machine tool according to claim 13, **characterized by** a tool magazine (44) in which a set of various tools (46) for the tool carrier (12) can be kept ready, the starting logic (94) being constructed such that the second relative trajectories (116, 122) are determined on the basis of that tool (32) which is held in the tool carrier (12) when the unplanned interruption occurs, so that it is possible to run through individual second trajectories (116, 122) which depend on the tool type of the tool used.

15. Machine tool according to claim 13 or 14, **characterized in that** the tool types respectively used are combined into groups, and **in that** the second trajectories (116, 122) can be determined on the basis of group membership of the tool used.

16. Machine tool according to one of claims 13 to 15, **characterized in that** the starting logic (94) includes a set of selectable control modules (172-182) for prepared second relative trajectories (116, 122).

17. Machine tool according to one of claims 13 to 16, **characterized in that** the starting logic (94) includes a logic part (192) with which the second relative trajectories (116, 122) can be determined as an image of the first relative trajectories (114, 120) run through in the reverse direction.

18. Machine tool according to one of claims 13 to 17, **characterized by** a second controller (72) for controlling auxiliary units (36, 44), the starting logic (94) coordinating the first and the second controller (70, 72), at least during a restart following the unplanned interruption.

19. Operating program module for a machine tool, having program code means in order to carry out all the steps of a method according to one of claims 1 to 12 when the program is executed on a machine tool controller.

20. Computer program product having a data storage medium on which an operating program module according to claim 19 is stored.

## Revendications

1. Procédé pour l'exploitation d'une machine-outil (10), qui présente un porte-outil (12) mobile par rapport à une pièce (40) et une première commande (56, 70) pour la commande d'un déplacement de travail relatif du porte-outil (12) par rapport à la pièce (40), présentant les étapes suivantes :
- commande de premières trajectoires de déplacement (114, 120) relatives du porte-outil (12) à l'aide d'un premier programme de commande (86) chargé dans la première commande (56, 70), qui définit une série d'opérations d'usinage prévues de façon successive,
- arrêt (144, 156) des déplacements de travail relatifs du porte-outil (12) en cas d'apparition d'un événement non prévu, et
- nouveau démarrage de premiers déplacements de travail relatifs du porte-outil (12) à partir d'une position de départ (118),
le porte-outil (12) étant déplacé le long de secondes trajectoires de déplacement (116, 122) relatives définies dans la position de départ (118), et les secondes trajectoires de déplacement (116, 122) relatives étant définies automatiquement en fonction de l'opération d'usinage, pour laquelle l'événement non prévu est arrivé, **caractérisé en ce que** le porte-outil (12) est déplacé au début du redémarrage d'abord à partir de sa position effective après l'arrêt (144, 146) le long des secondes trajectoires de déplacement (116, 122) dans la position de départ (118).

2. Procédé selon la revendication 1, **caractérisé en ce que** le porte-outil (12) maintient pendant les opérations d'usinage un outil (32) provenant d'un ensemble (44) de différents outils (46) et **en ce que** les secondes trajectoires de déplacement (116, 122) relatives sont définies en fonction de l'outil (32) qui est maintenu dans le porte-outil (12) lors de l'apparition de l'événement non prévu, de sorte que des secondes trajectoires de déplacement (116, 122) individuelles sont réalisées, qui sont dépendantes du type de l'outil utilisé.

3. Procédé selon la revendication 1 ou 2, **caractérisé en ce que** les types d'outil respectivement utilisés sont rassemblés en groupes et **en ce que** les secondes trajectoires de déplacement (116, 122) sont déterminées en fonction d'une appartenance à un groupe de l'outil utilisé.

4. Procédé selon l'une des revendications 1 à 3, **caractérisé en ce que** les secondes trajectoires de déplacement relatives (116, 122) sont sélectionnées dans un ensemble (172 - 182) de secondes trajectoires de déplacement (116, 122) relatives préparées.

5. Procédé selon l'une des revendications 1 à 4, **caractérisé en ce que** les secondes trajectoires de déplacement relatives (116, 122) sont définies (132) en fonction de premiers paramètres qui sont enregistrés avant une opération d'usinage dans la première commande (56, 70), de préférence dans le premier programme de commande (86).

6. Procédé selon l'une des revendications 1 à 5, **caractérisé en ce que** les secondes trajectoires de déplacement (116, 122) relatives sont définies (136) en fonction de seconds paramètres qui sont enregistrés dans une mémoire (100) non volatile.

7. Procédé selon l'une des revendications 1 à 6, **caractérisé en ce que** les secondes trajectoires de déplacement (116, 122) relatives sont définies à l'aide des premières trajectoires de déplacement (114, 120) relatives définies dans le premier programme de commande (86).

8. Procédé selon la revendication 7, **caractérisé en ce que** les secondes trajectoires de déplacement (116, 122) relatives sont déterminées comme une représentation, parcourue en marche arrière, des premières trajectoires de déplacement (114, 120) relatives.

9. Procédé selon l'une des revendications 1 à 8, **caractérisé en ce qu'**un paramètre d'utilisation est entré (170) lors du nouveau démarrage et **en ce que** l'opération d'usinage, lors de laquelle l'événement non prévu est apparu, est démarrée de nouveau (160) en fonction du paramètre d'utilisation entré.

10. Procédé selon l'une des revendications 1 à 9, **caractérisé en ce que** la machine-outil (10) présente également des ensembles auxiliaires (36, 44) qui sont activés en accord avec les premières trajectoires de déplacement (114, 120) relatives du porte-outil (12), et **en ce que**, lors du nouveau démarrage, également tous les ensembles auxiliaires (36, 44) sont amenés dans une position de départ respective qui est définie automatiquement à chaque fois en fonction de l'opération d'usinage lors de laquelle l'élément non prévu est arrivé.

11. Procédé selon la revendication 10, **caractérisé en ce que en ce que** des opérations de déplacement des ensembles auxiliaires (36, 44) sont commandées à l'aide d'une seconde commande (72) et **en ce que** la première et la seconde commande (70, 72) sont coordonnées au moyen d'une logique de démarrage (94).

12. Procédé selon l'une des revendications 1 à 11, **caractérisé en ce que** le porte-outil (12) est déplacé le long des secondes trajectoires de déplacement (116, 122) relatives avec une vitesse plus faible que le long des premières trajectoires de déplacement relatives.

13. Machine-outil, en particulier pour l'usinage par enlèvement de copeaux de pièces (40) métalliques, avec un porte-outil (12) mobile par rapport à une pièce (40) et avec une première commande (56, 70), qui commande à l'aide d'un premier programme de commande (86) définissant une série d'opérations d'usinage successives des premières trajectoires de déplacement (114, 120) relatives du porte-outil (12), également avec une logique (94), qui est réalisée de telle sorte que le porte-outil (12) peut être déplacé après une interruption non prévue des opérations d'usinage le long de secondes trajectoires de déplacement (116, 122) relatives et définies dans une position de départ (118), les secondes trajectoires de déplacement (116, 122) relatives étant déterminées automatiquement en fonction de l'opération d'usinage pour laquelle l'interruption est arrivée, **caractérisée en ce que** la logique (94) est une logique de démarrage, qui déplace le porte-outil (12) lors du nouveau démarrage de la machine-outil d'abord de sa position effective après l'interruption non prévue le long de la seconde trajectoire de déplacement (116, 122) dans la position de départ (118).

14. Machine-outil selon la revendication 13, **caractérisée par** un chargeur d'outil (44), dans lequel on met à disposition un ensemble de différents outils (46) pour le porte-outil (12), la logique de démarrage (94) étant réalisée de telle sorte que les secondes trajectoires de déplacement (116, 122) relatives déterminées en fonction de l'outil (32) qui est maintenu dans le porte-outil (12) lors de l'apparition de l'interruption non prévue, de sorte que des secondes trajectoires de déplacement (116, 122) individuelles, qui sont dépendantes du type de l'outil utilisé, sont exécutées.

15. Machine-outil selon la revendication 13 ou 14, **caractérisée en ce que** les types d'outil respectivement utilisés sont rassemblés en groupes et **en ce que** les secondes trajectoires de déplacement (116, 122) peuvent être définies en fonction d'une appartenance à un groupe de l'outil utilisé.

16. Machine-outil selon l'une des revendications 13 à 15, **caractérisée en ce que** la logique de démarrage (94) contient un ensemble de modules de commande (172 - 182) pouvant être sélectionnés pour des secondes trajectoires de déplacement (116, 122) relatives et préparées.

17. Machine-outil selon l'une des revendications 13 à 16, **caractérisée en ce que** la logique de démarrage (94) contient une partie de logique (192), avec laquelle les secondes trajectoires de déplacement (116, 122) relatives peuvent être définies comme une représentation, parcourue dans le sens arrière, des premières trajectoires de déplacement (114, 120) relatives.

18. Machine-outil selon l'une des revendications 13 à 17, **caractérisée par** une seconde commande (72) pour la commande d'ensembles auxiliaires (36, 44), la logique de démarrage (94) coordonnant la première et la seconde commandes (70, 72) au moins lors d'un nouveau démarrage après l'interruption non prévue.

19. Module de programme d'exploitation pour une machine-outil, avec des moyens de code de programme, afiin d'exécuter toutes les étapes d'un procédé selon l'une des revendications 1 à 12, lorsque le programme est exécuté sur une commande de machine-outil.

20. Logiciel informatique avec un support de données sur lequel est mémorisé un module de programme d'exploitation selon la revendication 19.
